# EUROPEAN PATENT SPECIFICATION

(11) **EP 1 551 150 B1**
(45) Date of publication and mention of the grant of the patent: **26.04.2006**
(21) Application number: 04360001.4
(22) Date of filing: 05.01.2004
(51) Int. Cl.: H04L 29/06

(54) **A method for determining whether a transaction is completed correctly, a network node and a data transmission network for carrying out the method**
Ein Verfahren zum Feststellen ob eine Transaktion korrekt abgelaufen ist, ein Netzknoten und ein Datenübertragungsnetz zur Durchführung des Verfahrens
Un procédé pour déterminer si une transaction s'est déroulée correctement, un noeud de réseau et un réseau de transmission de données pour la mise en oeuvre du procédé

(43) Date of publication of application: 06.07.2005
(73) Proprietor: ALCATEL, 75008 Paris (FR)
(72) Inventor: Domschitz, Peter, 70191 Stuttgart (DE); Tomsu, Marco, 71254 Ditzingen (DE); Kessler, Marcus, 70329 Stuttgart (DE)
(74) Representative: Rausch, Gabriele

(56) References cited:
- US-A1- 2002 144 148
- US-B1- 6 629 131

## Description

This invention relates to a method for determining whether a transaction comprising a transmission of content data from a first subscriber to a second subscriber via network nodes of a data transmission network building a transmission path, said transmission network being controlled by controlling means of a network controller, is completed correctly and a data transmission network and a network node comprising means, being designed to carry out the method. The method relates to an improved usage of, e.g. Gateways, Digital Subscriber Line Access Multipliers (DSLAM), Wireless/Mobile Access Nodes, Session Border Elements, Access Gates, novel service-creation platforms and/or related software.

The emerging broadband market for fixed, e.g. DSL, and/or mobile, e.g. GPRS and/or UMTS, networks is evolving towards a single Internet Protocol- (IP-) based converged universal multiservice delivery platform, offering a giant market volume for innumerable service providers.
Reliable and trusted content delivery tightly coupled with a micro-payment solution is considered as a key prerequisite for the global arise of E-commerce and commoditization of World Wide Web- (WWW-) based services. For telecommunication (telco) network operators, making money today with pure Internet connectivity service, the field of service creation support is an obvious opportunity for an extension of their business models.

There are several demands on a trusted content delivery method and/or system to enable the extension of these business models:
- Customers and service providers both demand for a reliable delivery of pay-content, and payment solutions which satisfy convenience, commodity and security aspects as well.
- The service provider needs confirmation, that the content has really been delivered to the ordering customer, equivalent to certified mail, i.e. proof-of-delivery (POD). This enables lawful reminding of the customers, because it is required for legally effective reminding of the customers. Also the payments should be guaranteed with successful delivery, equivalent to cash-on-delivery (COD).
- The customer demands a trusted relationship to the service provider itself or a sales and billing proxy. As in traditional business relations the customers want to pay only after receiving the requested content. Also it is not in the interest of the customer to "broadcast" sensitive banking information like credit card numbers over the network to a increasing number of service providers with unknown and/or untrusted reputation.

According to prior art there are WWW-based solutions with service-individual login or authentication procedures, followed by an exchange of sensitive banking information, and a transport of the content data (content) via the intemet.

The existing solutions offer neither security nor true convenience. These disadvantages are resulting in the following problems:
- Inconvenience for the customer (subscriber);
- Disclosure of customer's sensitive banking information to any content provider;
- False payment in case of service interruption and incomplete and/or corrupted delivery of content data;
- Service misuse as hijacking of connections, address and/or username faking is possible;
- No delivery confirmation for the content provider that the content has in fact been delivered to the authorized customer is provided.

The US 6,629,131 B1 teaches an electronic mailing method with a function of reception confirmation. A unique code is assigned to a mail by a mail control system. The unique code is stored in a data base together with related information, e.g. the title of the mail. The unique code is sent to a receiver together with the mail from where the unique code is sent to the mail control system together with a reception confirmation. The latter unique code is compared to the unique code stored in the data base and if they are equal, a reception confirmation is sent to the sender of the mail.

The US 2002/0144148 A1 teaches a system and method for secure transmission of information, wherein a list of electronic mails of a sender and a receiver is compared.

It is therefore an object of the invention to provide a method for determining whether a transaction is completed correctly and a data transmission network and a network node for carrying out the method which overcome the problems associated with the related art, in particular which provide a reliable and trusted content delivery from a first to a second subscriber.

The object concerning a method for determining whether a transaction is completed correctly is attained by the method according to claim 1. The object concerning the network node is attained by the system defined in claim 6 and the object concerning the data transmission network is attained by the system defined in claim 7.
Further advantageous features of the invention are defined in the depending claims.

The inventive method for determining whether a transaction comprising a transmission of content data from a first subscriber to a second subscriber via network nodes of a data transmission network building a transmission path, said transmission network being controlled by a network controlling means which may be part of one of said network nodes or may be part of a network controller, is completed correctly, is comprising the steps of:
- receiving said content data from said first subscriber by a first network node of said network nodes,
- setting up a first data content report, comprising information about said content data, or receiving said first data content report from said first subscriber, by said first network node,
- setting up said transmission path by choosing a second network node of said network nodes, having an exclusive data transfer connection to said second subscriber, by said network controlling means,
- sending said content data from said first network node to said second network node,
- setting up a second data content report, comprising information about said content data, by said second network node,
- sending said content data from said second network node to said second subscriber,
- making a comparison by comparing said first data content report to said second data content report, by said network controlling means and
   deciding whether said transmission of content data from said first subscriber to said second subscriber is completed correctly depending on a result of said comparison, by said network controlling means.
A service using the inventive method is specially tailored to telcos, which operate as network access providers (NAP), because they have exclusive control over the network nodes (access node hardware) of the transmission network, i.e. the network controller is a NAP. In general the network controller can be associated with an institution, which provides a trusted content delivery service. It has the right to control the network nodes of the transmission path. The exclusive data transfer connection is an unambiguous physical relation from the second network node to the second subscriber, i.e. to a terminal used by the second subscriber. For example this relation is a telephone connection. If there is confidence between the first subscriber, e.g. a content provider, and the network controller the first data content report can be received from the first subscriber. The network controlling means can be part of one of the network nodes of the transmission part as well as they can be part of a further network node, i.e. any computer, being controlled by the network controller. In the latter case the data content reports have to be sent to the further network node to be compared.

The inventive method results at least in the following advantages:
- The inventive method offers straightforward support of micropayment and payment-after-delivery mechanisms, e.g. by the monthly bill of the NAP.
- No special requirements and extensions of customer (first subscriber) and content provider (second subscriber) equipment is needed.
- Content providers can open up a large customer base for trusted content delivery and/or micropayment by a single contract with a large telco company.
- To use the inventive method, only an upgrade of current best-effort internet towards quality and service-awareness is needed. This only includes programmable network elements near to the network access points to host the subscriber-related software to perform the steps of the inventive method (data flow objects). The basic functions, like policy enforcement points, are required for IP-based multi-service networks anyway.
- The inventive method may be used by any telco supplier offering service-aware IP networks and any E-commerce infrastructure supplier. Trusted content delivery combined with micro-payment support will be requested from all telco operators to increase their business opportunities.

Preferably, a message comprising data characterising the content data to be transmitted is received by said first network node. This message enables the network controller to deliver contents being requested by one of the subscribers.

It is preferred that data comprising information characterising said transaction, preferably a transaction code, is sent from said first network node to said second network node or network controller, preferably said controlling means. Thus said transaction is specified unambiguously.

Very advantageously, a data flow software object is instantiated by said network controlling means in said first and said second network node. Said data flow software object is comprising software code sections by which the steps of the inventive method are carried out. By the aid of said data flow objects said content data is transmitted using a special transmission protocol and/or a specific encryption code. Thus only the data flow objects which are instantiated to perform a specific transaction can send and receive the content data concerning this transaction.

Preferably, said first and/or second data content report is comprising information characterising said transaction, preferably a transaction code received from said network controlling means by said first and/or said second network node. This enables a user of the inventive method to use the transaction code to encrypt the content data and/or the data content reports before transmitting them.

The inventive network node of a path of a data transmission network for carrying out the method for determining whether a transaction comprising a transmission of content data from a first subscriber to a second subscriber via said path is completed correctly according to the inventive method is comprising:
- content data receiving means, being designed to receive said content data,
- content reporting means, being designed to set up a first data content report, or to receive a first data content report, comprising information about said content data,
- sending means, being designed to send said content data to said second subscriber or to a second network node,
- data content report receiving means, being designed to receive a second data content report, comprising information about said content data,
- network controlling means, being designed to make a comparison by comparing said first data content report to said second data content report and to decide whether said transmission of content data from said first subscriber to said second subscriber is completed correctly depending on a result of said comparison.
The inventive network node is being designed to carry out the steps of the inventive method. Therefore it offers the possibility to achieve the advantages of the inventive method. As the inventive network node is part of the transmission path, no additional controlling means are necessary.

The inventive data transmission network for carrying out the inventive method for determining whether a transaction comprising a transmission of content data from a first subscriber to a second subscriber via network nodes of a data transmission network building a transmission path, said transmission network being controlled by a network controlling means which may be part of one of said network nodes or may be part of a network controller, is completed correctly, is comprising:
- a first network node of said network nodes, being designed to receive said content data from said first subscriber, and to set up a first data content report, comprising information about said content data, or receiving said first data content report from said first subscriber,
- said controlling means being designed to set up said transmission path by choosing a second network node of said network nodes, having an exclusive data transfer connection to said second subscriber,
- sending means, being designed to send said content data from said first network node to said second network node,
- said second network node, being designed to set up a second data content report, comprising information about said content data and to send said content data from said second network node to said second subscriber, and
- said controlling means being designed to make a comparison by comparing said first data content report to said second data content report, and to decide whether said transmission of content data from said first subscriber to said second subscriber is completed correctly depending on a result of said comparison. The inventive data transmission network is being designed to carry out the steps of the inventive method. Therefore it offers the possibility to achieve the advantages of the inventive method. If the controlling means of the transmission network are not part of the network nodes being part of the transmission path the steps of the inventive method can be controlled by means of a central controlling device, comprising the controlling means.

Preferably said first network node is having an exclusive data transfer connection to said first subscriber. If there is no confidence between the first subscriber and the network controller, this preferred embodiment enables trusted content delivery. If a network which is not controlled by the network controller is positioned between the first subscriber and the first network node, the latter one should be an access node to the network, which is controlled by the network controller to certify reasons of possible data losses occurring outside the network controlled by the network controller.

In another preferred embodiment of the invention, the data transmission network for carrying out the method for determining whether a transaction comprising a transmission of content data from a first subscriber to a second subscriber via said path is completed correctly according to the inventive method is comprising an inventive network node and at least a second network node, comprising content data receiving means, being designed to receive said content data, content reporting means, being designed to set up a data content report, or to receive a data content report, comprising information about said content data, and sending means, being designed to send said content data to said second subscriber or to a second network node. In this embodiment the inventive network node is used to carry out the inventive method. Therefore it offers the possibility to achieve the advantages of the inventive network node.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.

In fig. 1 an example scenario in which the inventive method is used for a reliable delivery of content data in a trusted content delivery system, building a data transmission network according to the invention, is shown.
In fig. 2 an example of the inventive method used to deliver content data from a content application server to a client application is shown.

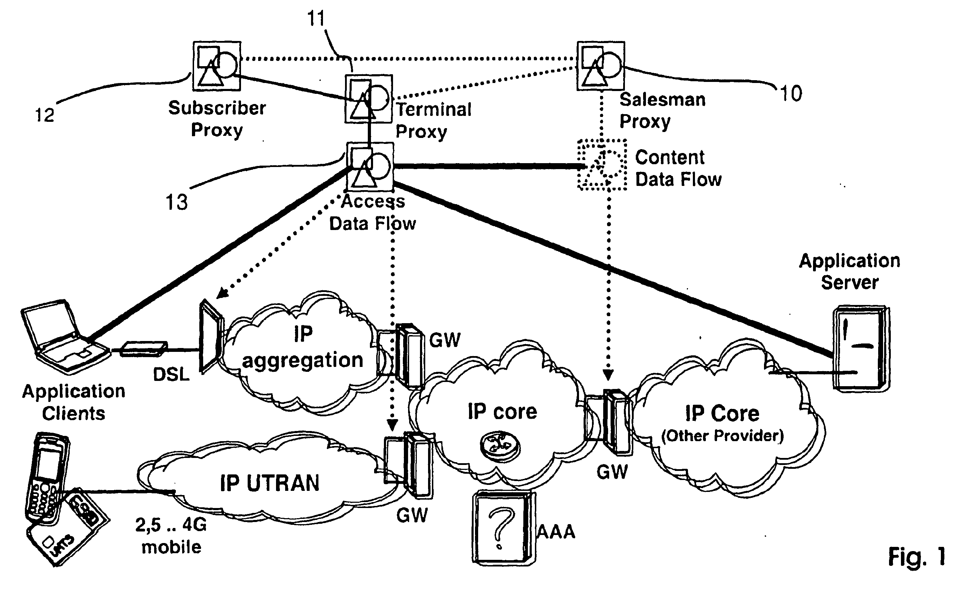

The inventive data transmission network shown in fig. 1 is comprising network nodes (gateways (GW)) and controlling means which are performing the steps of the inventive method concerning e.g. authentication, authorization and accounting (AAA). Content data is transmitted via a transmission path built of network nodes from a first subscriber (application server) to a second subscriber (application client), i.e. the content data is transmitted from a terminal, e.g. an application server of the first subscriber to a terminal, e.g. a client application computer and/or a mobile phone, of the second subscriber, as shown in the figure. The gateways are overlaid with service objects, i.e. they are loaded with software comprising code sequences to perform the steps of the inventive method (data flow object). As an example scenario a distributed trusted content delivery system is shown. According to the inventive method it is determined whether a transaction (content data transmission) is completed correctly and such determination is reported. Preferably, this is done by one of the network nodes of the data transmission path, which is comprising means for carrying out the inventive method. The inventive method is used for determining whether a transaction from a certain first subscriber to a certain second subscriber is completed correctly and for reporting such determination to the first subscriber. Network Access Providers (NAPs) control and monitor the physical path of the content data flow from the network entry gates to the customer's access node by inserting data flow objects into the network. Data flow objects are implemented in software (SW) or hardware (HW) or both. They exchange messages with other objects distributed over the network, and may naturally be implemented in object-oriented technologies. At the beginning of a transaction a data flow object is created. This data flow object characterizes the transaction, the first subscriber and the terminal from which the transaction is originated. By means of the data flow object a reliable and trusted path is set up from the first subscriber to the second subscriber. The transaction content is delivered via this path and after successful completion of the transaction such completion is reported.
Data flow objects are located at distinct access nodes, e.g. DSLAM, and are so ensuring an unambiguous relation between the ordering subscriber, its terminal and its physical access link. The same is true for network elements located at the border to the provider and its content server.

In the figure there are shown several data flow objects as symbols. Two of them, named subscriber proxy 12 and salesman proxy 10, are floating objects, which are not bound to a location. A data flow object controlling the access data flow 13 is bound to an access gateway, which is shown as the GW one of the dotted arrows is pointing at in the figure. This current access gateway is an inventive network node. The Terminal Proxy 11 is the representation of the terminal of the second subscriber in the network of the NAP. It contains information about properties of the terminal of the second subscriber ,at least the IP-address of the terminal of the second subscriber. The Terminal Proxy 11 may be used to improve the inventive method by a transcoding, which may be necessary eventually. In the figure there is shown a mobile phone as the terminal of the second subscriber. A mobile phone needs different MPEG-data streams as a computer terminal connected to a DSL-connection, e.g. it needs a different bandwidth, different resolution and/or different usable codec. This can be recognized by another instance in the network and/or by the aid of the terminal proxy by the first subscriber, who can react accordingly.
Data flow objects are instantiated on-demand for each transaction, at least one at the subscriber access node and optionally one for the content server. They set up a reliable and trusted pathway between the involved provider node and the subscriber terminal. Via this path the transaction content is delivered. Instantiation of these data flow objects is secured in that they are created only in context with the creation of a valid transaction relation, and are always linked to the subscriber and the terminal which is placing the order. After successful completion of delivery and reporting of the final state and transaction details the data flow objects are removed.

Data flow objects can also be instantiated once for atonement-like services, which do not have a predefined start and end of usage, e.g. pay television (TV) channels. In this case the data flow object serves as defined and trusted delivery point for an associated terminal.

Data flow objects have the task to take up the identified content, deliver it to the next involved data flow object or finally to the subscriber's terminal, and record and compile trusted detailed reports at the end of each transaction, e.g. for the customer and the content provider.

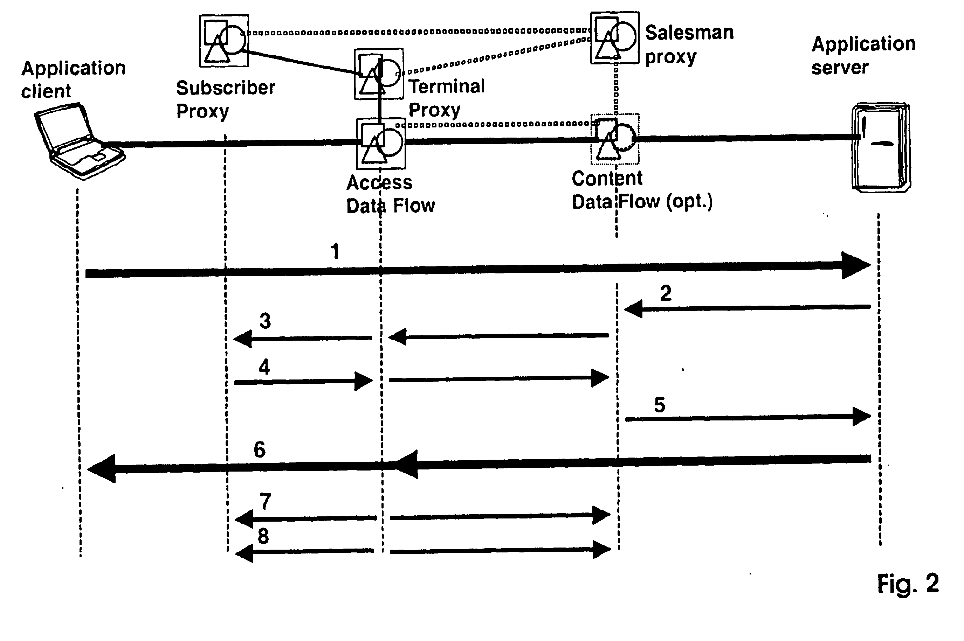

In the example of the inventive method shown in fig. 2 content data is delivered from a content application server (first subscriber) to a client application (second subscriber). The direction of the data flow is shown as arrows marked with reference numbers in the figure. The delivery is carried out via network nodes of a data transmission network building a transmission path. The transmission network is being controlled by controlling means of a network controller, e.g. a NAP. For example these controlling means are a network node, loaded with a software with code sections to perform the controlling, e.g. a terminal proxy. Firstly, the client application requests for pay-content (content data) 1. A mandate for content data delivery is created. This is done by a standard HTTP request from a client terminal to a WWW server. After that, the application server redirects the mandate to the salesman proxy 2, which is a software loaded on a network node, e.g. a server, of the data transmission network. The salesman proxy is located in the same trusted domain as the subscriber. Now the second subscriber is discovered and contacted 3 and negotiation e.g. about the trusted content delivery and/or payment creditability is started. The transmission path is set up by choosing a second network, having an exclusive data transfer connection to said second subscriber, by said network controlling means. A check for the subscriber's profile and a confirmation of the order is performed 4. This profile may include data concerning e.g. payment preferences, e.g. prepaid account or limits, deny lists and an age verification. After that, the salesman proxy requests content data from the application server 5. Now the trusted content data delivery (transmission) via network nodes, building a transmission path, e.g. the access gateway and optional the Content Gateway, through the terminal proxy and the salesman proxies is performed 6. The content data from said first subscriber is received by a first network node of said network nodes of the transmission network and sent from the first network node to the second network node and from the second network node to the second subscriber. The terminal proxy is a software which is loaded on a network node of the transmission path. The content data transmission is done by a hop-by-hop principle. It has a standard HTTP response towards the client terminal. A decision is made, whether the transmission of content data from the first subscriber to the second subscriber is completed correctly depending on a result of a comparison of data content reports. A first data content report, comprising information about said content data is set up by the first network node, and a second data content report, comprising information about said content data, is set up by the second network node. The comparison may be made by the second network node, i.e. a data flow object which is instantiated at the second network node (second data flow object). Depending on the result of the comparison, it is decided whether the transmission of content data from the first subscriber to the second subscriber is completed correctly. Finally the terminal proxy confirms complete delivery 7 of the content data, if so, and a detailed report, for example including billing information is sent to the salesman and the subscriber proxies 8. A trusted delivery of the content data is guaranteed, because the content data passed through the access node of the subscriber.

## Claims

1. A method for determining whether a transaction comprising a transmission of content data from a first subscriber to a second subscriber via network nodes of a data transmission network building a transmission path, said transmission network being controlled by a network controlling means which may be part of one of said network nodes or may be part of a network controller, is completed correctly, comprising the steps of
- receiving said content data from said first subscriber by a first network node of said network nodes,
- setting up a first data content report, comprising information about said content data, or receiving said first data content report from said first subscriber, by said first network node,
- setting up said transmission path by choosing a second network node of said network nodes, having an exclusive data transfer connection to said second subscriber, by said network controlling means,
- sending said content data from said first network node to said second network node,
- setting up a second data content report, comprising information about said content data, by said second network node,
- sending said content data from said second network node to said second subscriber,
- making a comparison by comparing said first data content report to said second data content report, by said network controlling means and
deciding whether said transmission of content data from said first subscriber to said second subscriber is completed correctly depending on a result of said comparison, by said network controlling means.

2. The method according to claim 1, **characterised in that** a message comprising data characterising the content data to be transmitted is received by said first network node.

3. The method according to claim 1, **characterised in that** data comprising information characterising said transaction, preferably a transaction code, is sent from said first network node to said second network node or network controller, preferably said controlling means.

4. The method according to claim 1, **characterised in that** a data flow software object is instantiated by said network controlling means in said first and said second network node, said data flow software object comprising software code sections by which the steps of the method according to claim 1 are carried out.

5. The method according to claim 1, **characterised in that** said first and/or second data content report is comprising information characterising said transaction, preferably a transaction code received from said network controlling means by said first and/or said second network node.

6. A network node of a path of a data transmission network for carrying out the method for determining whether a transaction comprising a transmission of content data from a first subscriber to a second subscriber via said path is completed correctly according to the method of claim 1, comprising
- content data receiving means, being designed to receive said content data,
- content reporting means, being designed to set up a first data content report, or to receive a first data content report, comprising information about said content data,
- sending means, being designed to send said content data to said second subscriber or to a second network node,
- data content report receiving means, being designed to receive a second data content report, comprising information about said content data,
- network controlling means, being designed to make a comparison by comparing said first data content report to said second data content report and
to decide whether said transmission of content data from said first subscriber to said second subscriber is completed correctly depending on a result of said comparison.

7. A data transmission network for carrying out the method for determining whether a transaction comprising a transmission of content data from a first subscriber to a second subscriber via network nodes of a data transmission network building a transmission path, said transmission network being controlled by a network controlling means which may be part of one of said network nodes or may be part of a network controller, is completed a network controller, is completed correctly, according to claim 1, comprising
- a first network node of said network nodes, being designed to receive said content data from said first subscriber, and to set up a first data content report, comprising information about said content data, or receiving said first data content report from said first subscriber,
- said controlling means being designed to set up said transmission path by choosing a second network node of said network nodes, having an exclusive data transfer connection to said second subscriber,
- sending means, being designed to send said content data from said first network node to said second network node,
- said second network node, being designed to set up a second data content report, comprising information about said content data and to send said content data from said second network node to said second subscriber, and
- said controlling means being designed to make a comparison by comparing said first data content report to said second data content report, and to decide whether said transmission of content data from said first subscriber to said second subscriber is completed correctly depending on a result of said comparison.

8. The data transmission network according to claim 7, **characterised in that** said first network node is having an exclusive data transfer connection to said first subscriber.

9. A data transmission network for carrying out the method for determining whether a transaction comprising a transmission of content data from a first subscriber to a second subscriber via said path is completed correctly according to the method of claim 1, comprising a network node according to claim 6 and at least a second network node, comprising
- content data receiving means, being designed to receive said content data,
- content reporting means, being designed to set up a data content report, or to receive a data content report, comprising information about said content data,
- sending means, being designed to send said content data to said second subscriber or to a second network node.

## Patentansprüche

1. Verfahren zum Feststellen, ob eine Transaktion korrekt abgelaufen ist, welche eine Übertragung von Inhaltsdaten von einem ersten Teilnehmer zu einem zweiten Teilnehmer über Netzknoten eines Datenübertragungsnetzes umfasst, welche einen Übertragungspfad bilden, wobei das Übertragungsnetz von einer Netzkontrollvorrichtung gesteuert wird, die Teil eines der Netzknoten sein kann oder Teil einer Netzkontrollinstanz, umfassend die Schritte des:
- Empfangens der Inhaltsdaten von dem ersten Teilnehmer durch einen ersten Netzknoten der genannten Netzknoten;
- Erstellens eines Dateninhalt-Berichts, umfassend Informationen über die Inhaltsdaten, oder des Empfangens des ersten Dateninhalt-Berichts von dem ersten Teilnehmer durch den ersten Netzknoten;
- Aufbauens des ersten Übertragungspfads durch Wählen eines zweiten Netzknotens der genannten Netzknoten, der eine exklusive Datenübertragungsverbindung zu dem zweiten Teilnehmer aufweist, durch die Netzkontrollvorrichtungen;
- Sendens der Inhaltsdaten von dem ersten Netzknoten an den zweiten Netzknoten;
- Erstellens eines zweiten Dateninhalt-Berichts, umfassend Informationen über die Inhaltsdaten, durch den zweiten Netzknoten;
- Sendens der Inhaltsdaten von dem zweiten Netzknoten an den zweiten Teilnehmer;
- Durchführens eines Vergleichs, indem der erste Dateninhalt-Bericht mit dem zweiten Dateninhalt-Bericht durch die Netzkontrollvorrichtung verglichen wird; und
Entscheidens, ob die Übertragung der Inhaltsdaten von dem ersten Teilnehmer zu dem zweiten Teilnehmer korrekt abgelaufen ist, abhängig von einem Ergebnis des Vergleichs durch die Netzkontrollvorrichtung.

2. Verfahren nach Anspruch 1, **dadurch gekennzeichnet, dass** eine Nachricht, die Daten zur Charakterisierung der zu übertragenden Inhaltsdaten umfasst, von dem ersten Netzknoten empfangen wird.

3. Verfahren nach Anspruch 1, **dadurch gekennzeichnet, dass** Daten, die Informationen zur Kennzeichnung der Transaktion umfassen, vorzugsweise einen Transaktionscode, von dem ersten Netzknoten zum zweiten Netzknoten oder der Netz-Kontrollinstanz, vorzugsweise der Kontrollvorrichtung, gesendet werden.

4. Verfahren nach Anspruch 1, **dadurch gekennzeichnet, dass** ein Datenstrom-Softwareobjekt durch die Netzkontrollvorrichtung in dem ersten und zweiten Netzknoten instantiiert wird, wobei das Datenstromobjekt Softwarecodeabschnitte umfasst, durch welche die Schritte des Verfahrens gemäß der Erfindung durchgeführt werden.

5. Verfahren nach Anspruch 1, **dadurch gekennzeichnet, dass** der erste und/oder zweite Dateninhalt-Bericht Informationen umfasst, welche die Transaktion charakterisieren, vorzugsweise einen Transaktionscode, der von der Netzkontrollvorrichtung durch den ersten und/oder zweiten Netzknoten empfangen wird.

6. Netzknoten auf einem Pfad eines Datenübertragungsnetzes zum Durchführen des Verfahrens zum Feststellen, ob eine Transaktion korrekt in Übereinstimmung mit dem Verfahren gemäß Anspruch 1 abgelaufen ist, wobei die Transaktion eine Übertragung von Inhaltsdaten von einem ersten Teilnehmer zu einem zweiten Teilnehmer über diesen Pfad aufweist, umfassend:
- Vorrichtungen zum Empfangen von Inhaltsdaten, die für das Empfangen der Inhaltsdaten konzipiert sind;
- Vorrichtungen zum Berichten von Inhalten, die dafür konzipiert sind, einen ersten Dateninhalt-Bericht zu erstellen oder einen ersten Dateninhalt-Bericht zu empfangen, der Informationen über die Inhaltsdaten umfasst;
- Sendevorrichtungen, die dafür konzipiert sind, die Inhaltsdaten an den zweiten Teilnehmer oder an einen zweiten Netzknoten zu senden;
- Vorrichtungen zum Empfangen von Dateninhalt-Berichten, die dafür konzipiert sind, einen zweiten Dateninhalt-Bericht zu empfangen, der Informationen über die Inhaltsdaten umfasst;
- Netzkontrollvorrichtungen, die dafür konzipiert sind, einen Vergleich durchzuführen, indem der erste Daten inhalt-Bericht mit dem zweiten Dateninhalt-Bericht verglichen wird, und
Entscheidung darüber, ob die Übertragung der Inhaltsdaten von dem ersten Teilnehmer an den zweiten Teilnehmer korrekt abgelaufen ist, abhängig von einem Ergebnis des Vergleichs.

7. Datenübertragungsnetz zur Durchführung des Verfahrens zum Feststellen, ob eine Transaktion korrekt abgelaufen ist, welche eine Übertragung von Inhaltsdaten von einem ersten Teilnehmer zu einem zweiten Teilnehmer über Netzknoten eines Datenübertragungsnetzes umfasst, welche einen Übertragungspfad bilden, wobei das Übertragungsnetz von einer Netzkontrollvorrichtung kontrolliert wird, die Teil eines der Netzknoten sein kann oder Teil einer Netz-Kontrollinstanz gemäß Anspruch 1, umfassend:
- einen ersten Netzknoten der genannten Netzknoten, der dafür konzipiert ist, die Inhaltsdaten von dem ersten Teilnehmer zu empfangen und einen ersten Dateninhalt-Bericht zu erstellen, der Informationen über die Inhaltsdaten umfasst, oder dafür, den ersten Dateninhalt-Bericht von dem ersten Teilnehmer zu empfangen;
- die Kontrollvorrichtung, die dafür konzipiert ist, den Übertragungspfad aufzubauen, indem ein zweiter Netzknoten aus den genannten Netzknoten gewählt wird, der eine exklusive Datenübertragungsverbindung zu dem zweiten Teilnehmer besitzt;
- Sendevorrichtungen, die dafür konzipiert sind, die Inhaltsdaten von dem ersten Netzknoten an den zweiten Netzknoten zu senden;
- den zweiten Netzknoten, der dafür konzipiert ist, einen zweiten Dateninhalt-Bericht zu erstellen, der Informationen über die Inhaltsdaten umfasst, und dafür, die Inhaltsdaten von dem zweiten Netzknoten an den zweiten Teilnehmer zu senden; und
- die Kontrollvorrichtung, die dafür konzipiert ist, einen Vergleich durchzuführen, wobei der erste Dateninhalt-Bericht mit dem zweiten Dateninhalt-Bericht verglichen wird, und dafür, zu entscheiden, ob die Übertragung der Inhaltsdaten von dem ersten Teilnehmer an den zweiten Teilnehmer korrekt abgelaufen ist, abhängig von einem Ergebnis des Vergleichs.

8. Datenübertragungsnetz nach Anspruch 7, **dadurch gekennzeichnet, dass** der erste Netzknoten über eine exklusive Datenübertragungsverbindung zum ersten Teilnehmer verfügt.

9. Datenübertragungsnetz zur Durchführung des Verfahrens zum Feststellen, ob eine Transaktion korrekt in Übereinstimmung mit dem Verfahren nach Anspruch 1 abgelaufen ist, wobei die Transaktion eine Übertragung von Inhaltsdaten von einem ersten Teilnehmer zu einem zweiten Teilnehmer über den Pfad umfasst, umfassend einen Netzknoten nach Anspruch 6 und mindestens einen zweiten Netzknoten, umfassend
- Vorrichtungen zum Empfangen von Inhaltsdaten, die dafür konzipiert sind, die Inhaltsdaten zu empfangen;
- Vorrichtungen zum Berichten von Inhalten, die dafür konzipiert sind, einen Dateninhalt-Bericht zu erstellen oder einen Dateninhalt-Bericht zu empfangen, der Informationen über die Inhaltsdaten umfasst;
- Sendevorrichtungen, die dafür konzipiert sind, die Inhaltsdaten an den zweiten Teilnehmer oder an einen zweiten Netzknoten zu senden.

## Revendications

1. Procédé pour déterminer si une transaction comprenant une transmission de données de contenu d'un premier abonné à un second abonné via des noeuds de réseau d'un réseau de transmission de données constituant un trajet de transmission, ledit réseau de transmission étant contrôlé par un moyen de contrôle de réseau qui peut faire partie d'un desdits noeuds de réseau ou peut faire partie d'un contrôleur de réseau, est achevée correctement, comprenant les étapes de
- recevoir lesdites données de contenu dudit premier abonné par un premier noeud de réseau desdits noeuds de réseau,
- établir un premier rapport de contenu de données, comprenant des informations au sujet desdites données de contenu, ou recevoir ledit premier rapport de contenu de données dudit premier abonné, par ledit premier noeud de réseau,
- établir ledit trajet de transmission en choisissant un second noeud de réseau desdits noeuds de réseau, ayant une connexion de transfert de données exclusive avec ledit second abonné, par ledit moyen de contrôle de réseau,
- envoyer lesdites données de contenu dudit premier noeud de réseau audit second noeud de réseau,
- établir un second rapport de contenu de données, comprenant des informations au sujet desdites données de contenu, par ledit second noeud de réseau,
- envoyer lesdites données de contenu dudit second noeud de réseau audit second abonné,
- effectuer une comparaison en comparant ledit premier rapport de contenu de données audit second rapport de contenu de données, par ledit moyen de contrôle de réseau et décider si ladite transmission de données de contenu dudit premier abonné audit second abonné est achevée correctement en fonction d'un résultat de ladite comparaison, par ledit moyen de contrôle de réseau.

2. Procédé selon la revendication 1, **caractérisé en ce qu'**un message comprenant des données caractérisant les données de contenu devant être transmises est reçu par ledit premier noeud de réseau.

3. Procédé selon la revendication 1, **caractérisé en ce que** des données comprenant des informations caractérisant ladite transaction, de préférence un code de transaction, sont envoyées dudit premier noeud de réseau audit second noeud de réseau ou contrôleur de réseau, de préférence ledit moyen de contrôle.

4. Procédé selon la revendication 1, **caractérisé en ce qu'**un objet logiciel de flot de données est instancié par ledit moyen de contrôle de réseau dans ledit premier et ledit second noeud de réseau, ledit objet logiciel de flot de données comprenant des sections de code de logiciel par lesquelles les étapes du procédé selon la revendication 1 sont exécutées.

5. Procédé selon la revendication 1, **caractérisé en ce que** ledit premier et/ou second rapport de contenu de données comprend des informations caractérisant ladite transaction, de préférence un code de transaction reçu dudit moyen de contrôle de réseau par ledit premier et/ou ledit second noeud de réseau.

6. Noeud de réseau d'un trajet d'un réseau de transmission de données pour exécuter le procédé pour déterminer si une transaction comprenant une transmission de données de contenu d'un premier abonné à un second abonné via ledit trajet est achevée correctement selon le procédé de la revendication 1, comprenant
- un moyen de réception de données de contenu, qui est conçu pour recevoir lesdites données de contenu,
- un moyen de rapport de contenu, qui est conçu pour établir un premier rapport de contenu de données, ou pour recevoir un premier rapport de contenu de données, comprenant des informations au sujet desdites données de contenu,
- un moyen d'envoi, qui est conçu pour envoyer lesdites données de contenu audit second abonné ou à un second noeud de réseau,
- un moyen de réception de rapport de contenu de données, qui est conçu pour recevoir un second rapport de contenu de données, comprenant des informations au sujet desdites données de contenu,
- un moyen de contrôle de réseau, qui est conçu pour effectuer une comparaison en comparant ledit premier rapport de contenu de données audit second rapport de contenu de données et
pour décider si ladite transmission de données de contenu dudit premier abonné audit second abonné est achevée correctement en fonction d'un résultat de ladite comparaison.

7. Réseau de transmission de données pour exécuter le procédé pour déterminer si une transaction comprenant une transmission de données de contenu d'un premier abonné à un second abonné via des noeuds de réseau d'un réseau de transmission de données constituant un trajet de transmission, ledit réseau de transmission étant contrôlé par un moyen de contrôle de réseau qui peut faire partie d'un desdits noeuds de réseau ou peut faire partie d'un contrôleur de réseau, est achevée correctement, selon la revendication 1, comprenant
- un premier noeud de réseau desdits noeuds de réseau, qui est conçu pour recevoir lesdites données de contenu dudit premier abonné, et pour établir un premier rapport de contenu de données, comprenant des informations au sujet desdites données de contenu, ou recevoir ledit premier rapport de contenu de données dudit premier abonné,
- ledit moyen de contrôle qui est conçu pour établir ledit trajet de transmission en choisissant un second noeud de réseau desdits noeuds de réseau, ayant une connexion de transfert de données exclusive avec ledit second abonné,
- un moyen d'envoi, qui est conçu pour envoyer lesdites données de contenu dudit premier noeud de réseau audit second noeud de réseau,
- ledit second noeud de réseau, qui est conçu pour établir un second rapport de contenu de données, comprenant des informations au sujet desdites données de contenu et pour envoyer lesdites données de contenu dudit second noeud de réseau audit second abonné, et
- ledit moyen de contrôle qui est conçu pour effectuer une comparaison en comparant ledit premier rapport de contenu de données audit second rapport de contenu de données, et pour décider si ladite transmission de données de contenu dudit premier abonné audit second abonné est achevée correctement en fonction d'un résultat de ladite comparaison.

8. Réseau de transmission de données selon la revendication 7, **caractérisé en ce que** ledit premier noeud de réseau a une connexion de transfert de données exclusive avec ledit premier abonné.

9. Réseau de transmission de données pour exécuter le procédé pour déterminer si une transaction comprenant une transmission de données de contenu d'un premier abonné à un second abonné via ledit trajet est achevée correctement selon le procédé de la revendication 1, comprenant un noeud de réseau selon la revendication 6 et au moins un second noeud de réseau, comprenant
- un moyen de réception de données de contenu, qui est conçu pour recevoir lesdites données de contenu,
- un moyen de rapport de contenu, qui est conçu pour établir un rapport de contenu de données, ou pour recevoir un rapport de contenu de données, comprenant des informations au sujet desdites données de contenu,
- un moyen d'envoi, qui est conçu pour envoyer lesdites données de contenu audit second abonné ou à un second noeud de réseau.
